# EUROPEAN PATENT APPLICATION

(11) **EP 4 350 850 A2**
(43) Date of publication of application: **10.04.2024**
(21) Application number: 23200525.6
(22) Date of filing: 28.09.2023
(51) Int. Cl.: H01M 50/107, H01M 50/119, H01M 50/152, H01M 50/148, H01M 50/159, H01M 50/342, H01M 50/474, H01M 50/477, H01M 50/483, H01M 50/486, H01M 50/538, H01M 50/55, H01M 50/559, H01M 50/566, H01M 50/583, H01M 50/593

(54) **CYLINDRICAL SECONDARY BATTERY**

(30) Priority: 05.10.2022 KR 20220126938
(71) Applicant: Samsung SDI Co., Ltd., Yongin-si, Gyeonggi-do 17084 (KR)
(72) Inventor: LEE, Sang Hyo, 17084 Yongin-si (KR)
(74) Representative: Marks & Clerk LLP

(57) **Abstract**

A cylindrical secondary battery includes: a cylindrical can; a cap plate coupled to the can, the cap plate having a convex area, a concave area, and an opening; an electrode assembly accommodated in the can and including a first electrode plate and a second electrode plate; and a first terminal exposed to the outside of the cap plate through the opening and having a convex area and a concave area. The convex areas and the concave areas of the cap plate and the first terminal are alternately arranged.

## Description

### BACKGROUND

### 1. Field

Aspects of embodiments of the present disclosure relate to a cylindrical secondary battery.

### 2. Description of the Related Art

Generally, a cylindrical secondary battery has an electrode assembly wound in a cylindrical shape accommodated together with an electrolyte in a cylindrical can, which is then sealed with a cap plate. The cap plate may be provided with a cap-up or a rivet terminal as a structure acting as a positive terminal.

The rivet terminal is thicker than the cap-up structure because it requires physical coupling strength to maintain a compressive force on a gasket. In addition, because soldering bonding is structurally impossible, a fusible link which allows for current to be cut off by being melted by high current is not feasible.

The above-described information serves as background to the present disclosure and is for improving understanding of the background of the present disclosure. Thus, it may include information that does not constitute the related (or prior) art.

### SUMMARY

Aspects of embodiments of the present disclosure provide a cylindrical secondary battery having a current blocking function.

A cylindrical secondary battery, according to an embodiment of the present disclosure, includes: a cylindrical can; a cap plate coupled to the can, the cap plate having a convex area, a concave area, and an opening; an electrode assembly accommodated in the can and including a first electrode plate and a second electrode plate; and a first terminal exposed to the outside of the cap plate through the opening and having a convex area and a concave area. The convex areas and the concave areas of the cap plate and the first terminal are alternately arranged.

The first terminal may include: a base block electrically connected to the first electrode plate; a head facing the base block and exposed to the outside through the opening; and a fusible link connecting the base block and the head and having a diameter less than that of the head.

The base block may include: a first protrusion protruding from an edge of a top surface thereof toward the head; a second protrusion protruding from a center thereof toward the head; and a groove recessed between the first protrusion and the second protrusion.

The cap plate may include: a flat first plate part; a second plate part parallel to the first plate part; an inclined part inclined upwardly from the first plate part and extending between the first plate part and the second plate part; and an extension part extending from the second plate part toward the base block.

The second plate part and the first protrusion may face each other, and the extension part and the groove may face each other.

The first terminal may further include an insulation member between the base block and the head.

The insulation member may be a glass to metal sealing material.

The cylindrical secondary battery may further include: a first electrode collector plate electrically connected to the first electrode plate and the first terminal; and a second electrode collector plate electrically connected to the second electrode plate and the can.

Opposite ends of the can may be open. The cap plate may be coupled to one open end, and a circular bottom plate may be coupled to the other open end.

The first electrode collector plate may be between the electrode assembly and the cap plate, and the second electrode collector plate may be between the electrode assembly and the bottom plate.

A surface of the second plate part may protrude further outwardly than a surface of the head.

The insulation member may include a protrusion protruding further outwardly than a surface of the head.

At least some of the above and other features of the invention are set out in the claims.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, describe aspects and features of the present disclosure. In the drawings:
FIG. 1 illustrates a schematic cross-sectional view of a cylindrical secondary battery according to an embodiment;
FIG. 2 illustrates an enlarged cross-sectional view of a cap plate and a first terminal of the cylindrical secondary battery shown in FIG. 1;
FIG. 3 illustrates an enlarged cross-sectional view of a bottom plate of the cylindrical secondary battery shown in FIG. 1;
FIG. 4 illustrates a schematic cross-sectional view of an electrical connection relationship in the cylindrical secondary battery shown in FIG. 1;
FIG. 5 illustrates a cross-sectional view of a fusible link separated from the cylindrical secondary battery illustrated in FIG. 4; and
FIGS. 6 and 7 illustrate enlarged cross-sectional views of a cap plate and a first terminal according to various embodiments.

### DETAILED DESCRIPTION

Embodiments of the present disclosure may be embodied in many different forms and should not be construed as being limited to the embodiments described herein. Rather, these embodiments are provided so that this disclosure will be thorough and complete and will fully convey the scope of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) referring to the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

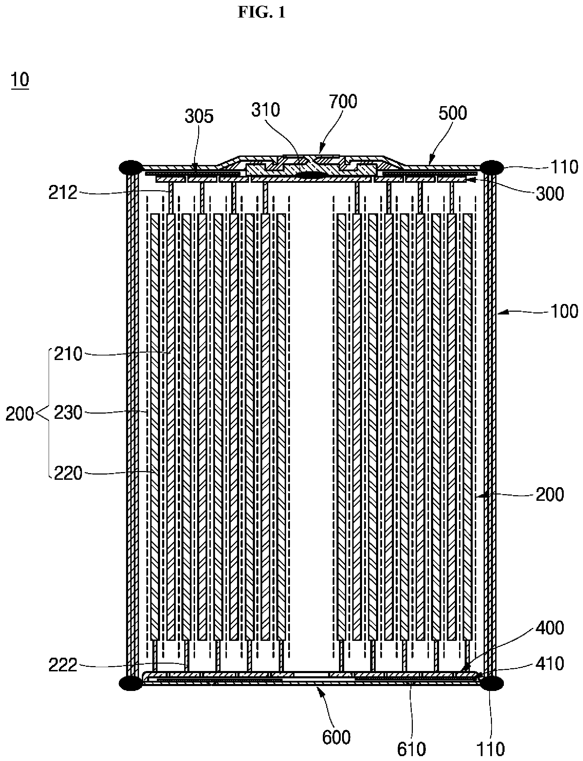

Hereinafter, a cylindrical secondary battery according to embodiments of the present disclosure will be described, in detail, with reference to the accompanying drawings. For convenience, an upper side is defined as an upper portion, and a lower side is defined as a lower portion based on the orientation of FIG. 1.

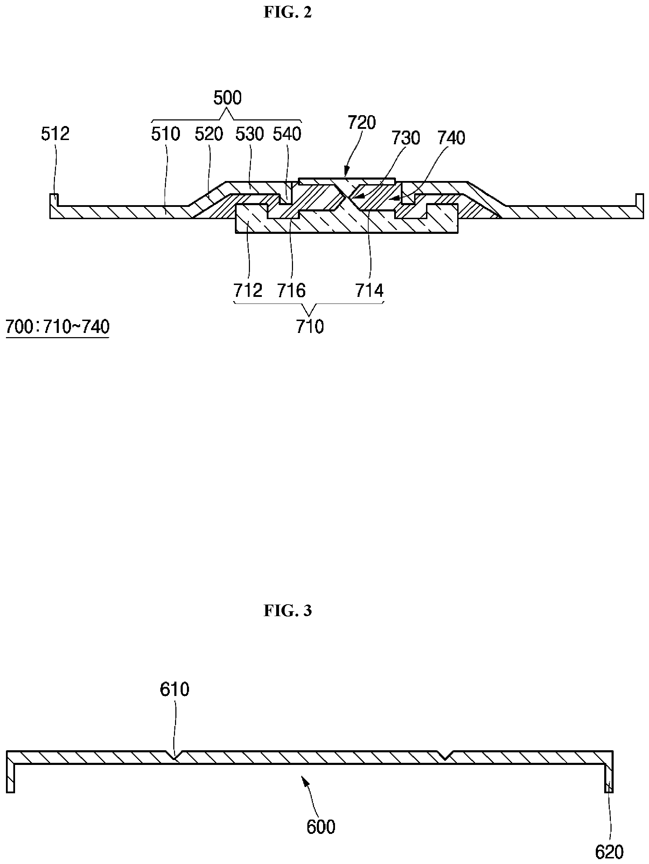

FIG. 1 is a schematic cross-sectional view of a cylindrical secondary battery according to an embodiment. FIG. 2 illustrates an enlarged cross-sectional view of a cap plate and a first terminal of the cylindrical secondary battery shown in FIG. 1. FIG. 3 illustrates an enlarged cross-sectional view of a bottom plate the cylindrical secondary battery shown in FIG. 1.

Referring to FIG. 1, a cylindrical secondary battery 10, according to an embodiment of the present disclosure, may include a cylindrical can 100, a cap plate 500 coupled to one end of the can 100, and a bottom plate 600 coupled to another end (e.g., an opposite end) of the can 100. The electrode assembly 200 may be accommodated together with an electrolyte in the can 100. The electrode assembly 200 may be electrically connected to a first electrode collector plate 300 and a second electrode collector plate 400 and may be electrically connected to a first terminal 700 and the can 100. After the can 100 and the bottom plate 600 are assembled together, the electrode assembly 200, connected to the first electrode collector plate 300 and the second electrode collector plate 400, may be accommodated in the can 100, and the cap plate 500 may be assembled to seal the can 100.

Referring to FIG. 1, the can 100 may have a hollow cylindrical shape, and at least one of one end or the other end of the can 100 in a longitudinal direction may be open. If one end of the can is open, a circular bottom part of the can and a side part extending from the bottom part may be integrated with each other. If both ends of the can 100 are open, the circular bottom plate 600 may be separately coupled to the can 100, as described above. The can 100 may be made of steel, a steel alloy, nickel-plated steel, a nickel-plated steel alloy, aluminium, an aluminium alloy, or an equivalent thereof but is not limited thereto.

Referring to FIG. 1, the electrode assembly 200 may include a first electrode plate 210, a second electrode plate 220, and a separator 230. For example, the first electrode plate 210 may be a positive electrode plate on which a positive electrode active material layer (e.g., transition metal oxide (LiCoO₂, LiNiO₂, LiMn₂O₄, etc.)) is disposed on both surfaces thereof. The first electrode plate 210 may have a first electrode non-coating portion 212 on which the positive electrode active material layer is not disposed. The first electrode non-coating portion 212 may be disposed to face an upper portion of the can 100, which is one end of the can 100, with respect to FIG. 1. In some embodiments, the second electrode plate 220 may be a negative electrode plate on which a negative electrode active material layer (e.g., graphite, carbon, etc.) is disposed on both surfaces thereof. The second electrode plate 220 may include a second electrode non-coating portion 222 on which the negative electrode active material layer is not disposed. The second electrode non-coating portion 222 may be disposed to face a lower portion of the can 100, which is the other end of the can 100, with respect to FIG. 1. In some embodiments, the separator 230 may be interposed between the first electrode plate 210 and the second electrode plate 220 to prevent a short circuit therebetween while allowing only lithium ions to move therebetween. For example, the first electrode plate 210 may be aluminium (Al) foil, the second electrode plate 220 may be copper (Cu) or nickel (Ni) foil, and the separator 230 may be made of polyethylene (PE) or polypropylene (PP), but the present disclosure is not limited to these materials. The first electrode plate 210, the second electrode plate 220, and the separator 230 may be wound in a substantially cylindrical shape and accommodated in the can 100. Here, the first electrode non-coating portion 212 may be electrically connected to the first electrode collector plate 300, and the second electrode non-coating portion 222 may be electrically connected to the second electrode collector plate 400.

Referring to FIG. 1, the first electrode collector plate 300 may be disposed between the first electrode non-coating portion 212 and the cap plate 500 and electrically connected to the first electrode non-coating portion 212. An insulator 305 may be inserted between the first electrode collector plate 300 and the cap plate 500. The first electrode collector plate 300 may be electrically connected to a first terminal 700, to be described later, by welding (welding part 310). Because the first electrode non-coating portion 212 and the first terminal 700 are electrically connected to each other, the first terminal 700 may be a positive electrode.

The second electrode collector plate 400 may be disposed between the second electrode non-coating portion 222 and the bottom plate 600 and electrically connected to the second electrode non-coating portion 222. The second electrode collector plate 400 may be in contact with or welded to the bottom plate 600 or the can 100 and, thus, may be electrically connected to the bottom plate 600 or the can 100. An insulator 410 may be inserted between the second electrode collector plate 400 and the bottom plate 600 to insulate an area other than a portion that is in contact with the bottom plate 600 or the can 100. Because the second electrode non-coating portion 222 and the can 100 are electrically connected to each other, the can 100 may be a negative electrode.

Referring to FIGS. 1 and 2, the cap plate 500 may have a substantially circular plate shape when viewed from above and may be welded to the can 100 to seal the can 100. The cap plate 500 may be made of aluminium or the same material as the can 100. The cap plate 500 may have a circular plate ring shape having a hollow (e.g., an opening) at a center thereof. The bottom plate 600 may be coupled to the lower portion of the can 100 facing (e.g., opposite to) the cap plate 500.

In some embodiments, the cap plate 500 may include a first plate part 510 parallel to the first electrode collector plate 300, an inclined part 520 connected to the first plate part 510 and inclined upwardly from the first plate part 510, a second plate part 530 connected to the inclined part 520 and parallel to the first plate part 510, and an extension part 540 vertically extending downwardly from the second plate part 530.

The cap plate 500 may have a protrusion 512 protruding upwardly along an edge of the first plate part 510. The protrusion 512 may be a portion to be welded to the can 100 and may form a welding part 110 seated on the can 100 and melted during laser welding to weld the cap plate 500 to the can 100. Because the first plate part 510 is welded to the can 100, the first plate part 510 may have the same negative polarity as the can 100.

The inclined part 520 may extend upwardly to form an obtuse angle with respect to the first plate part 510.

The second plate part 530 may have an area less than that of the first plate part 510. One end of the second plate part 530 may be connected to the inclined part 520, and another end thereof may be disposed toward the hollow at the center of the cap plate 500. The end of the second plate part 530 toward the hollow may be bent downwardly to form the extension part 540. The first terminal 700 may be disposed below the second plate part 530 and the extension part 540.

Referring to FIG. 3, the bottom plate 600 may have a substantially circular plate shape when viewed from below and may be coupled to the lower portion of the can 100 to seal the can 100. A notch 610 that is configured to rupture if gas pressure inside the can 100 exceeds a reference (or predetermined) pressure may be formed in a plate surface (e.g., an inner plate surface) of the bottom plate 600. The protrusion 620 may protrude downwardly along an edge of the bottom plate 600. The protrusion 620 may be welded to the can 100 to form a welded part 110.

Referring to FIGS. 1 and 2, the above-described first terminal 700 may include a base block 710 electrically connected to the first electrode collector plate 300, a head 720 electrically connected to the outside, a fusible link 730 connecting the base block 710 to the head 720, and an insulation member 740 insulating the first terminal 700 from the cap plate 500. In some embodiments, the base block 710, the head 720, and the fusible link 730 may be made of aluminium.

The base block 710 may have a circular plate shape when viewed from the bottom and may have a flat bottom surface and a top surface with an uneven structure. The bottom surface of the base block 710 may be electrically connected to the first electrode collector plate 300 by welding or the like (formation of a weld part 310). In some embodiments, the base block 710 may include a first protrusion 712 protruding upwardly along an edge of the top surface of the base block 710 and a second protrusion 714 protruding upwardly at the center thereof. The base block 710 may have a groove 716 defined therein and recessed downwardly between the first protrusion 712 and the second protrusion 714. A height from the bottom surface of the base block 710 to the top surface of the first protrusion 712 may be greater than a height from the bottom surface of the base block 710 to the top surface of the second protrusion 714 (e.g., the first protrusion 712 may be thicker than the second protrusion 714). A height from the bottom surface of the base block 710 to the top surface of the groove 716 may be less than a height from the bottom surface of the base block 710 to the top surface of the second protrusion 714 such that the first protrusion 712 is disposed below the second plate part 530. The groove 716 is defined below the extension part 540. Due to this arrangement, the protruding portion of the first terminal 700 may be disposed on the protruding portion of the cap plate 500, and the protruding portion of the cap plate 500 may be disposed on the recessed portion of the first terminal 700. In some embodiments, the cap plate 500 and the first terminal 700 may be disposed in a structure in which the cap plate 500 and the first terminal 700 are alternately engaged with each other. The head 720 may be disposed to be spaced a distance (e.g., a predetermined distance) from (or above) the top surface of the second protrusion 714.

The head 720 may be a portion electrically connected to the outside and may be electrically connected to the base block 710 by the fusible link 730. Therefore, the head 720 has a positive polarity. In some embodiments, the head 720 may have a circular plate shape. A top surface of the head 720 may protrude from the top surface of the second plate part 530 of the cap plate 500 or may be disposed at the same height as the top surface of the second plate part 530 of the cap plate 500.

The fusible link 730 may mechanically and electrically connect the base block 710 to the head 720. The fusible link 730 may have a diameter less than a diameter of the head 720 and may have an hourglass shape. In some embodiments, the base block 710 and the head 720 may be soldered to each other to act as the fusible link 730. In some embodiments, because the fusible link 730 has a diameter less than that of the head 720, a shape of the fusible link 730 may not be limited as long as the fusible link 730 is melted if high current passes therethrough.

The insulation member 740 may be made of, for example, a glass to metal sealing (GTMS) material or a polymer material. The insulation member 740 may insulate the cap plate 500 from the first terminal 700 by filling the space between the base block 710 and the head 720 and may seal the inside of the can 100.

In an embodiment in which the insulation member 740 is made of the GTMS material, the insulation member 740 may be prepared in a manner in which a binder is mixed with glass powder, and then, the mixture is pressed and molded into a desired shape. Then, the cap plate 500 and the first terminal 700 are disposed on and integrated with the mixture in a sintering process. In an embodiment in which the insulation member 740 is made of the polymer material, the insulation member 740 may be manufactured to be thicker than a gap between the cap plate 500 and the base block 710 and then disposed under the cap plate 500. Then, the first terminal 700 may be bonded to be in close contact with the cap plate 500 and the base block 710 through heat treatment.

In the cylindrical secondary battery according to embodiments of the present disclosure having the above-described structure, operation of the fusible link and a state of the secondary battery when a high current is generated will be described hereinafter.

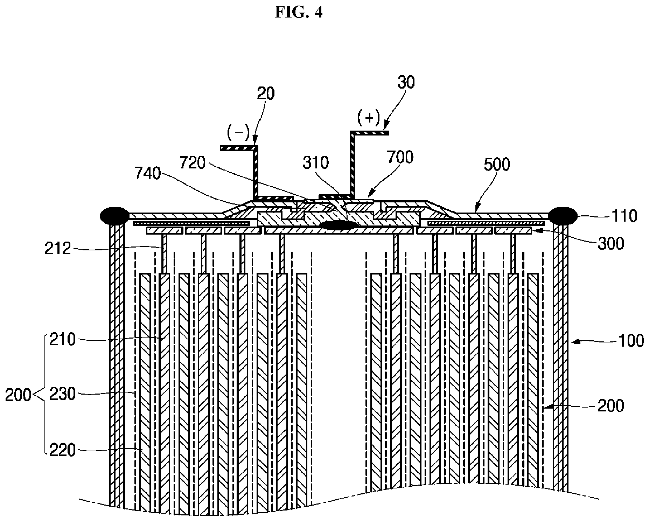

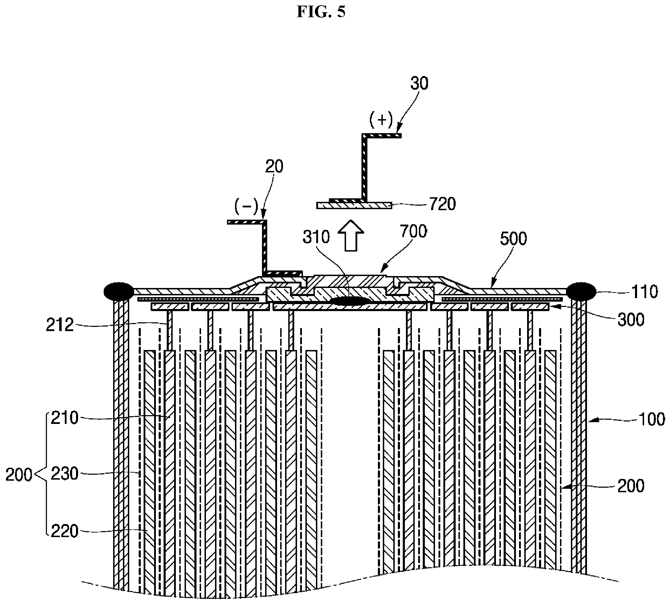

FIG. 4 illustrates a schematic cross-sectional view of an electrical connection relationship in the cylindrical secondary battery illustrated in FIG. 1. FIG. 5 illustrates a cross-sectional view the fusible link separated from the cylindrical secondary battery illustrated in FIG. 4.

Referring to FIG. 4, in the cylindrical secondary battery 10 as described above, an external positive terminal 30 may be connected to the head 720 of the first terminal 700, and an external negative terminal 20 may be connected to the cap plate 500. If a high current exceeding a limit (or maximum) current is generated due to an external short circuit or heat generation, Referring to FIG. 5, resistance in the fusible link 730, which has a diameter less than that of the head 720 or of the base block 710, may significantly increase causing the fusible link 730 to melt and, thus, disconnect from the base block 710. In some embodiments, the external positive terminal 30 and the head 720 of the first terminal 700 may be separated from the base block 710 to cut off current. In some embodiments, the fusible link 730 may act as a fuse to cut off the current.

In an embodiment in which the insulation member 740 is made of the GTMS material, the insulation member 740 may be very resistant to high heat, and thus, even if the head 720 is detached and separated, the base block 710 and the cap plate 500 may remain insulated from each other and sealed therebetween, referring to FIG. 5. This is achieved because the insulation member 740 is filled in the space in which the protruding and recessed structures of the cap plate 500 and the first terminal 700 are alternately disposed. Therefore, the sealing and insulation of the cylindrical secondary battery 10 may be secured even if the high current is generated and the current is cut off, and thus, safety may be maintained.

The secondary battery according to embodiments of the present disclosure may further include a structure for preventing the external short circuit.

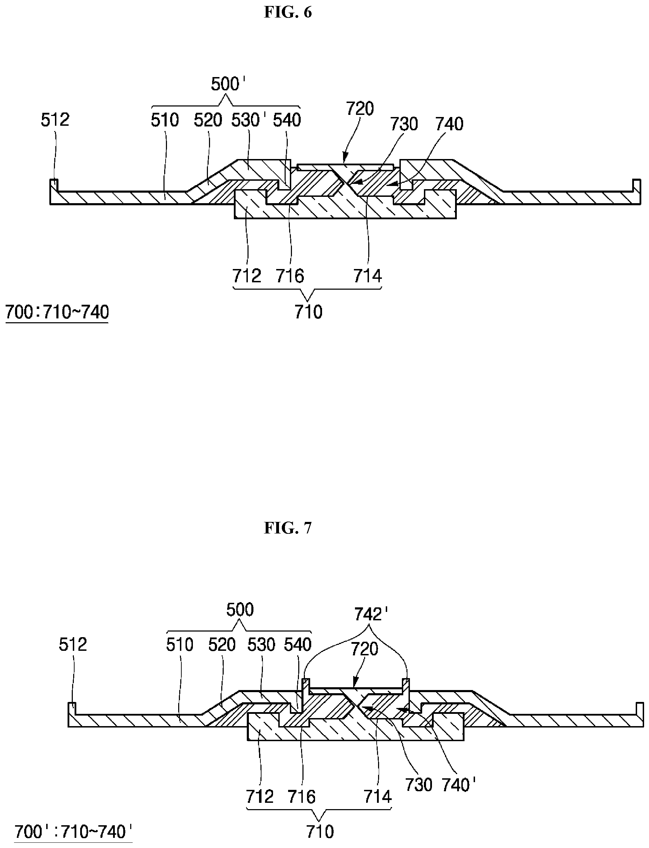

FIGS. 6 and 7 illustrate enlarged cross-sectional views of a cap plate and a first terminal according to other embodiments.

In another embodiment, Referring to FIG. 6, in a cap plate 500', a surface of a second plate part 530' (e.g., the top surface with reference to FIG. 6) may protrude further outwardly than (e.g., may protrude above) the surface of the head 720 of the first terminal 700. In some embodiments, in FIG. 6, a surface height of the second plate part 530' may be higher than a surface height of the head 720. For this, a thickness of the second plate part 530' may be greater than that of a first plate part 510 or an inclined part 520.

In another embodiment, for example, referring to FIG. 7, a protrusion 742' that protrudes further outwardly than (e.g., protrudes above) the surface of the head 720 of the first terminal 700' may be disposed on a top surface of an insulation member 740' (e.g., the surface exposed between the first plate part 510 and the head 720).

Due to the structure illustrated in FIG. 6 or 7, even if a linear metal object contacts the outside of the secondary battery, the first terminal and the cap plate may not be short circuited together. In some embodiments, limitations such as short circuit marks, voltage drop, damage, poor outer appearance, leakage, and the like may be prevented from occurring.

According to embodiments of the present disclosure, the rivet terminal structure may be improved to cut off the current if the high current is generated, thereby improving the safety of the secondary battery.

The above-described embodiments are merely some embodiments, and the present disclosure is not limited to the foregoing embodiments. It will be understood by those of ordinary skill in the art that various changes in form and details may be made therein without departing from the scope of the present disclosure as defined by the following claims and their equivalents.

## Claims

1. A cylindrical secondary battery comprising:
a cylindrical can;
a cap plate coupled to the can, the cap plate having a convex area, a concave area, and an opening;
an electrode assembly accommodated in the can and comprising a first electrode plate and a second electrode plate; and
a first terminal exposed to the outside of the cap plate through the opening and having a convex area and a concave area,
wherein the convex areas and the concave areas of the cap plate and the first terminal are alternately arranged.

2. The cylindrical secondary battery as claimed in claim 1, wherein the first terminal comprises:
a base block electrically connected to the first electrode plate;
a head facing the base block and exposed to the outside through the opening;
and
a fusible link connecting the base block and the head and having a diameter less than that of the head.

3. The cylindrical secondary battery as claimed in claim 2, wherein the base block comprises:
a first protrusion protruding from an edge of a top surface thereof toward the head;
a second protrusion protruding from a center thereof toward the head; and
a groove recessed between the first protrusion and the second protrusion.

4. The cylindrical secondary battery as claimed in claim 3, wherein the cap plate comprises:
a flat first plate part;
a second plate part parallel to the first plate part;
an inclined part inclined upwardly from the first plate part and extending between the first plate part and the second plate part; and
an extension part extending from the second plate part toward the base block.

5. The cylindrical secondary battery as claimed in claim 4, wherein the second plate part and the first protrusion face each other, and
wherein the extension part and the groove face each other.

6. The cylindrical secondary battery as claimed in any one of claims 2 to 5, wherein the first terminal further comprises an insulation member between the base block and the head.

7. The cylindrical secondary battery as claimed in claim 6, wherein the insulation member is a glass to metal sealing material.

8. The cylindrical secondary battery as claimed in any one of claims 1 to 7, further comprising:
a first electrode collector plate electrically connected to the first electrode plate
and the first terminal; and
a second electrode collector plate electrically connected to the second electrode plate and the can.

9. The cylindrical secondary battery as claimed in claim 8, wherein opposite ends of the can are open, and
wherein the cap plate is coupled to one open end, and a circular bottom plate is coupled to the other open end.

10. The cylindrical secondary battery as claimed in claim 9, wherein the first electrode collector plate is between the electrode assembly and the cap plate, and
wherein the second electrode collector plate is between the electrode assembly and the bottom plate.

11. The cylindrical secondary battery as claimed in any one of claims 4 to 10, wherein a surface of the second plate part protrudes further outwardly than a surface of the head.

12. The cylindrical secondary battery as claimed in any one of claims 6 to 10, wherein the insulation member comprises a protrusion protruding further outwardly than a surface of the head.
